# EUROPÄISCHE PATENTSCHRIFT

(11) **EP 3 355 078 B1**
(45) Veröffentlichungstag und Bekanntmachung des Hinweises auf die Patenterteilung: **24.04.2019**
(21) Anmeldenummer: 17209654.7
(22) Anmeldetag: 21.12.2017
(51) Int. Cl.: G01S 17/02, G01S 17/08

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 26.01.2017 DE 102017101500
(43) Veröffentlichungstag der Anmeldung: 01.08.2018
(73) Patentinhaber: Sick AG, 79183 Waldkirch (DE)
(72) Erfinder: Zwölfer, Ulrich, 79183 Waldkirch (DE)

(56) Entgegenhaltungen:
- US-A1- 2013 214 125
- US-A1- 2014 191 114

## Beschreibung

Die Erfindung betrifft einen optoelektronischen Sensor sowie ein Verfahren zur Erfassung von Objekten in einem Überwachungsbereich und zur Erzeugung einer Zufallszahl nach dem Oberbegriff von Anspruch 1 beziehungsweise 9.

Optoelektronische Sensoren gibt es in einem breiten Spektrum, das von eindimensionalen Lichtschranken und Lichttastern über Laserscanner bis zu Kameras reicht. Über die reine Objekterfassung hinaus wird in entfernungsmessenden Systemen auch eine Distanz zu dem Objekt bestimmt. Distanzsensoren nach dem Lichtlaufzeitprinzip messen dazu die Laufzeit eines Lichtsignals, die über die Lichtgeschwindigkeit der Entfernung entspricht. In einem Pulslaufzeitverfahren wird ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist.

Wichtige Parameter für entfernungsmessende Sensoren sind hohe Reichweiten und die Fähigkeit, starke wie auch schwach remittierende Objekte zu erkennen. Die Spanne zwischen nahen und fernen Objekten, zudem unterschiedlichen Remissionen etwa von glänzenden Flächen bis hinunter zu beispielsweise schwarzem Samt ist erheblich. Es besteht daher ein Bedarf an hochempfindlichen Empfangssystemen, die möglichst schon wenige Photonen detektieren und zudem sehr große Dynamikbereiche von > 100 dB abdecken.

Herkömmlich werden zur Steigerung der Empfindlichkeit in manchen optoelektronischen Sensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Eine noch größere Empfindlichkeit wird mit Lawinenphotodioden erreicht, die im sogenannten Geiger-Modus betrieben werden (SPAD, Single Photon Avalanche Diode). Hierbei wird die Lawinenphotodiode oberhalb der Durchbruchspannung vorgespannt, so dass bereits ein einziger, durch ein einzelnes Photon freigesetzter Ladungsträger eine nicht mehr kontrollierte Lawine auslösen kann, die dann aufgrund der hohen Feldstärke sämtliche verfügbaren Ladungsträger rekrutiert. Danach kommt die Lawine zum Erliegen (passive quenching) und steht für eine gewisse Totzeit nicht mehr zur Detektion zur Verfügung. Alternativ ist auch bekannt, die Lawine von außen zu erkennen und zu löschen (active quenching). Bezüglich dieser und weiterer allgemeiner Eigenschaften von SPADs sei beispielhaft auf den Artikel Eisele, Andreas, et al. "185 MHz count rate, 139 dB dynamic range single-photon avalanche diode with active quenching circuit in 130 nm CMOS technology." Int. Image Sensor Workshop (IISW), Onuma, Hockaido, 2011 verwiesen.

Eine SPAD zählt somit wie ein Geigerzähler Einzelereignisse. SPADs sind nicht nur hochempfindlich mit Verstärkungsfaktoren bis zu 10⁸, sondern auch vergleichsweise kostengünstig. Zudem lassen sie sich mit wenig Aufwand auf einer Leiterkarte integrieren. Eine Besonderheit ist die Tatsache, dass auch ein minimales Störereignis, wie ein Fremdlichtphoton oder Dunkelrauschen, das gleiche maximale Empfangssignal erzeugt wie ein Nutzlichtsignal. Um diese Auswirkungen zu begrenzen, werden in der Praxis mehrere SPADs gemeinsam ausgewertet.

Eine weitere Herausforderung bei der Entfernungsmessung mit einem Pulsverfahren ergibt sich aus Mehrdeutigkeiten und der gegenseitigen Beeinflussung mehrerer Sensoren. Mehrdeutigkeit bedeutet hier, dass bei Messwiederholungen nicht unmittelbar unterschieden werden kann, ob der empfangene Puls der zuletzt gesendete Puls oder ein früherer Puls ist, der in großer Entfernung reflektiert wurde. Deshalb werden Pseudo-Zufallsgeneratoren eingesetzt, mit denen das Zeitverhalten oder die Codierung variiert werden. Innerhalb eines Sensors sollen aber wegen des Aufwands üblicherweise keine hochkomplexen Pseudo-Zufallsgeneratoren implementiert werden. Verwendet man beispielsweise eine Kombination aus linear rückgekoppelten Schieberegistern (LFSR), so ergeben sich relativ kurze Perioden, nach denen sich das Muster wiederholt. Dadurch besteht die Gefahr, dass mehrere gleichartige Sensoren auf dem gleichen Muster arbeiten, somit Pulse nicht mehr unterscheidbar und eindeutig einem Sensor zuordenbar sind.

Aus der US 2015/0261502 A ist ein optischer Zufallsgenerator bekannt, bei dem eine LED auf ein SPAD-Array gerichtet wird. Aus den Zeitpunkten, zu denen SPADs ein Photon der Lichtquelle registrieren, wird eine Zufallszahl abgeleitet. Da die Lichtemission durch Quantenprozesse bestimmt ist, wird angenommen, dass die Emission von Photonen durch die LED zufällig ist. Die ganze Anordnung ist ein reiner Zufallsgenerator, die SPADs haben keine Sensorfunktion, sondern sind Teil des Zufallsgenerators. Erst recht werden die Zufallszahlen nicht für eine Sensorfunktion gedacht, also beispielsweise für die oben beschriebene Festlegung von Pulsfolgen oder Pulscodierungen. Vielmehr sind als Anwendungen Kryptographie, Passworterzeugung und Spiele genannt.

Die US 2014/0191114 A1 offenbart einen Näherungssensor mit einem Array von Lawinenphotodioden im Geigermodus, dessen Besonderheit ist, dass kein eigener Lichtsender vorgesehen ist. Das Detektionsprinzip beruht auf gelegentlich durch Dunkelrauschen von den Lawinenphotodioden ausgesandten Photonen, die im Falle eines nahen Objekts reflektiert werden und Ereignisse in weiteren Lawinenphotodioden auslösen. Dadurch ist in Anwesenheit eines Objekts der Dunkelstrom beziehungsweise die Anzahl von Stromspitzen durch auslösende Lawinenphotodiodenelemente erhöht.

Aus der US 2013/0214125 A1 ist ein Verfahren zum Erfassen von Umgebungslicht bekannt. Dabei wird als Referenz ein Dunkelstrom bestimmt. Es wird als vorteilhaft angesehen, zu diesem Zweck einige Pixel abzudunkeln, so dass sie kein einfallendes Licht registrieren. Lawinenphotodioden sind dabei nicht vorgesehen, es wird vielmehr ein herkömmlicher Bildsensor eingesetzt.

Es ist daher Aufgabe der Erfindung, Mehrdeutigkeiten und gegenseitige Beeinflussungen von Sensoren bei der Erfassung von Objekten weiter zu verringern.

Diese Aufgabe wird durch einen optoelektronischen Sensor sowie ein Verfahren zur Erfassung von Objekten in einem Überwachungsbereich und zur Erzeugung einer Zufallszahl nach Anspruch 1 beziehungsweise 9 gelöst. Die Lichtempfangselemente eines Lichtempfängers des Sensors sind Lawinenphotodiodenelemente, die jeweils mit einer Vorspannung oberhalb einer Durchbruchspannung vorspannbar und somit in einem Geiger-Modus betreibbar sind, oder anders ausgedrückt SPADs. Mindestens eines der Lawinenphotodiodenelemente ist als Messempfangselement ausgebildet, vorzugsweise sind dies die meisten einer insgesamt sehr großen Anzahl von Lawinenphotodiodenelementen. Das Empfangssignal des Messempfangselements wird zur Objekterfassung ausgewertet.

Die Erfindung geht nun von dem Grundgedanken aus, die Lawinenphotodiodenelemente selbst als Zufallsquelle zu nutzen. Mindestens ein Lawinenphotodiodenelement ist als Zufallserzeugungselement ausgebildet, und aus dessen Empfangssignal wird eine Zufallszahl generiert. Dabei sind Messempfangselement und Zufallserzeugungselement zunächst nur Namen für diejenigen Lawinenphotodiodenelemente, die für die entsprechende Funktion eingesetzt werden. Allerdings sind vorzugsweise die Zufallserzeugungselemente andere Lawinenphotodiodenelemente als die Messempfangselemente, sie haben also keine Doppelfunktion. Damit teilen sich die Lawinen photodiodenelemente in Messempfangselemente und Zufallserzeugungselemente auf. In weiteren vorteilhaften Ausgestaltungen werden diese Lawinenphotodiodenelemente dann möglicherweise zusätzlich ihrer Funktion entsprechend unterschiedlich ausgestaltet und/oder angeordnet.

Die Erfindung hat den Vorteil, dass mit Lawinenphotodiodenelemente im Geigermodus aufgrund von deren Natur und besonderem Rauschverhalten sehr gute Zufallszahlen erzeugt werden können. Denn das Dunkelrauschen (DCR, dark count rate) ist ein Quantenrauschen, das sich mit einer Poisson-Verteilung beschreiben lässt, und damit für alle praktischen Belange eine echte Zufallsquelle. Damit lassen sich leistungsfähige, zugleich einfache und kostengünstige Lösungen implementieren, um zuverlässig die gegenseitige Beeinflussung und gleichzeitig bei einer Entfernungsmessung Mehrdeutigkeiten zu vermeiden.

Der Sensor ist bevorzugt so aufgebaut, dass das mindestens eine Zufallserzeugungselement kein Messlicht aus dem Überwachungsbereich empfängt. Ein als Zufallserzeugungselement dienendes Lawinenphotodiodenelement ist demnach vorzugsweise blind für den Überwachungsbereich. Für herkömmliche Ansätze zur Zufallszahlenerzeugung mit SPADs wäre das untauglich, da sie auf dem Empfang zufällig erzeugter Photonen und damit Messlicht basieren. Erfindungsgemäß wird mit für den Überwachungsbereich blinden Zufallserzeugungselementen deren zufälliges Dunkelrauschen (DCR) ausgenutzt.

Das mindestens eine Zufallserzeugungselement ist bevorzugt gegen Lichteinfall abgeschirmt. Das Zufallserzeugungselement ist dann nicht nur gegen Messlicht und den Überwachungsbereich, sondern insgesamt optisch abgeschirmt und blind. Beispielsweise wird dazu eine optische Barriere verwendet, welche die Zufallserzeugungselemente abschirmt. Vorzugsweise wird das Lawinenphotodiodenelement selbst blind gemacht, insbesondere durch eine optisch intransparente Schicht, speziell eine Metallisierungsschicht.

Die Auswertungseinheit weist bevorzugt einen Zähler auf, der jeweils bei einem Detektionsereignis des Zufallserzeugungselements weitergezählt wird. Das ist eine besonders einfache Implementierung eines Zufallsgenerators. Der Zählerstand wird zufällig schneller oder langsamer gezählt, je nachdem, wie oft ein Dunkelrauschereignis stattfindet, beziehungsweise bei nicht vollständiger Abdeckung des Zufallserzeugungselements ein Photon eine unkontrollierte Lawine auslöst. Bei einem maximalen Zählerstand wird der Zähler vorzugsweise zurückgesetzt. Die Zählrate kann beschleunigt werden, indem mehrere Lawinenphotodiodenelemente als Zufallserzeugungselemente genutzt und mit dem Zähler verknüpft werden. Selbstverständlich ist mit Zählen auch ein alternatives Herabzählen umfasst. Es kann auch ein anderes Inkrement gewählt werden als Eins, beispielsweise eine zum maximalen Zählerstand teilerfremde größere Zahl, um die Ordnung der Sequenz aufzubrechen. Man kann zu diesem Zweck den Zähler auch als Index in eine Tabelle mit vorgegeben Zahlen verwenden, oder sogar als Anfangswert (Seed) eines Pseudozufallsalgorithmus'.

Vorzugsweise sind mehrere Lawinenphotodiodenelemente als Zufallserzeugungselement ausgebildet, und die Auswertungseinheit weist mehrere Zähler auf, die jeweils bei einem Detektionsereignis in einem dem Zähler zugeordneten Zufallserzeugungselement weitergezählt werden. So entsteht eine mehrdimensionale Zufallszahl oder eine zusammengesetzte Zufallszahl, etwa indem jeder Zähler für eine bestimmte Bitgruppe innerhalb der Zufallszahl zuständig ist. Derartige Gruppen können gleich groß sein, also bei einer n-Bit-Zufallszahl m Gruppen mit jeweils n/m Bits, aber die Erzeugung von Zufallszahlen funktioniert genauso mit unterschiedlich großen Gruppen. Die Zuordnung zwischen Zufallserzeugungselement und Zähler muss in keiner Richtung eindeutig sein. Ereignisse aus mehreren Zufallserzeugungselementen können denselben Zähler weiterzählen, und umgekehrt kann ein Zufallserzeugungselement mehrere Zähler weiterzählen oder sogar die Zuordnung zu einem Zähler wechseln. Wie im Falle eines Zählers ist es möglich, alternativ herabzuzählen, mit anderen Inkrementen als Eins zu zählen und den Zählerstand als Index, Teilindex oder Seed zu verwenden

Mindestens ein Zähler ist bevorzugt als 1-Bit-Zähler ausgebildet. Dieser Zähler ist dann ein Toggle-Bit, das seinen Zustand mit jedem Ereignis in einem zugeordneten Zufallserzeugungselement wechselt. Das ermöglicht besonders einfache Umsetzungen. Sind insbesondere alle Zähler 1-Bit-Zähler, so entsteht mit n Zählern eine n-Bit-Zufallszahl, welche die Zustände in ihren Bits zufällig ändert. Anders als bei einfachem Weiterzählen haben damit aufeinanderfolgende Zufallszahlen keinen praktisch relevanten Zusammenhang mit ihrem jeweiligen Vorgänger.

Der Sensor weist bevorzugt einen Lichtsender zum Aussenden eines Lichtsignals auf, wobei die Auswertungseinheit dafür ausgebildet ist, eine Eigenschaft des Lichtsignals, insbesondere dessen Modulation, in Abhängigkeit von der Zufallszahl vorzugeben.

Lichtsender und Lichtempfänger sind verschiedene Komponenten, obwohl nicht ausgeschlossen ist, dass sie gemeinsam auf einem Chip integriert werden. Der Sensor verwendet demnach eine zufällige Modulation, beispielsweise Frequenz einer Amplitudenmodulation. Pulse sind ebenfalls eine Form der Modulation. Unter einem Puls wird im Rahmen dieser Beschreibung nicht nur ein einfacher Puls, sondern auch eine kompliziertere Form wie ein Doppelpuls oder sogar Pulscode verstanden, und es kann beispielsweise die Pulsform oder eine Pulsfolge zufällig verändert werden.

Die Auswertungseinheit ist bevorzugt dafür ausgebildet, einen Sendezeitpunkt des Lichtsignals, insbesondere eines als Puls ausgebildeten Lichtsignals, in Abhängigkeit von der Zufallszahl vorzugeben. Damit lässt sich das deterministische Zeitverhalten aufbrechen, beispielsweise indem wiederholte Messungen jeweils mit einer zufälligen Verzögerung (Jitter) beaufschlagt werden. Dadurch wird verhindert, dass sich baugleiche Sensoren auch gleich verhalten, und eine gegenseitige Beeinflussung vermieden.

Die Auswertungseinheit dafür ausgebildet ist, den Sendezeitpunkt als ein der Zufallszahl entsprechendes Vielfaches einer vorgegebenen Minimalverzögerung vorzugeben. Bei einem pulsbasierten System ist vorzugsweise die Minimalverzögerung mindestens so groß wie die Pulsbreite. Implementiert werden kann eine derartige Verzögerung, indem ein Verzögerungselement wie eine Delay-Line so oft durchlaufen wird, wie die Zufallszahl angibt.

Der Sensor ist bevorzugt als entfernungsmessender Sensor ausgebildet, dessen Auswertungseinheit eine Lichtlaufzeit und daraus einen Objektabstand bestimmt. Das Messprinzip wurde einleitend kurz beschrieben. Beispielsweise kann bei einem Phasenverfahren die Frequenz aus der Zufallszahl abgeleitet werden oder ein durch die Zufallszahl vorgegebenes Frequenzhopping ausgeführt werden. Besonders bevorzugt ist aber eine Entfernungsmessung mit einem Pulsverfahren, bei dem die einzelnen Sendezeitpunkte der Pulse anhand der Zufallszahl zufällig bestimmt werden. Das resultiert effektiv in einer individuellen Codierung für den Sensor, die von einem baugleichen weiteren entfernungsmessenden Sensor nicht wiederholt und daher nicht verwechselt wird.

Der Sensor ist bevorzugt als Laserscanner mit einem Lichtsender und einer beweglichen Ablenkeinheit zur periodischen Ablenkung des Lichtstrahls in dem Überwachungsbereich ausgebildet. Als Scanmechanismus kommen alle bekannten Konzepte wie Schwing- und Drehspiegel oder beweglicher Messkopf in Betracht. Üblicherweise wird auch das Empfangslicht periodisch abgelenkt, wobei es aber auch Scanner gibt, die einen statischen Matrixchip benutzen und durch elektronische Ansteuerung je nach Messrichtung eine aktive Pixelgruppe nachführen.

Die Auswertungseinheit ist bevorzugt dafür ausgebildet, eine Vielzahl von Einzelmessungen durch wiederholtes Aussenden und Empfangen von Lichtpulsen und/oder mittels verschiedener Messempfangselemente gemeinsam auszuwerten, um den Abstand des Objekts zu bestimmen. Es erfolgt somit eine statistische Auswertung über Zeit durch Messwiederholung und Ort durch Verwendung einer Vielzahl von Lawinenphotodiodenelementen. Die einzelnen Empfangssignale werden beispielsweise in einem Histogramm akkumuliert, und anschließend wird das Histogramm ausgewertet. Dabei kann die Auswertung auf Ebene von Empfangssignalen, aber auch Einzellichtlaufzeiten des jeweiligen Lichtempfangselements beziehungsweise der jeweiligen Messwiederholung erfolgen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines entfernungsmessenden Sensors in koaxialer Anordnung;
- Fig. 2: ein vereinfachtes Ersatzschaltbild einer einzelnen Lawinenphotodiode im Geiger-Modus zur Erläuterung von deren Funktionsprinzip;
- Fig. 3: eine schematische Darstellung der Signale im Sendepfad zur Erläuterung einer zufälligen Abfolge von Sendepulsen; und
- Fig. 4: ein Blockdiagramm einer Ausführungsform eines Zufallsgenerators auf Basis von SPAD-Signalen.

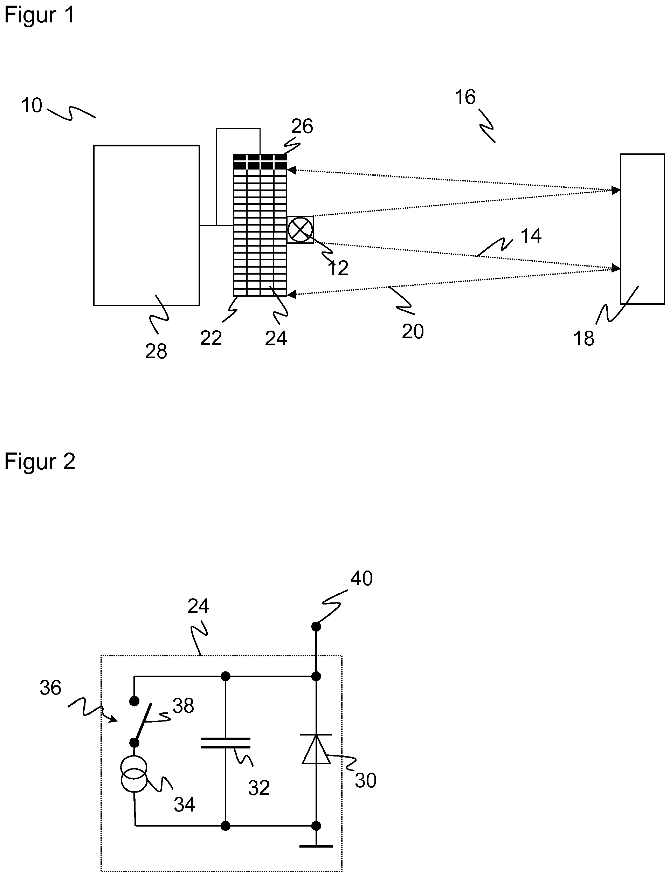

Figur 1 zeigt eine vereinfachte schematische Blockdarstellung eines optoelektronischen Sensors 10 in einer Ausführungsform als einstrahliger Lichttaster. Ein Lichtsender 12, beispielsweise eine LED oder eine Laserlichtquelle, sendet ein Lichtsignal 14 in einen Überwachungsbereich 16 aus. Trifft er dort auf ein Objekt 18, so wird ein Teil des Lichtes remittiert oder reflektiert und kehrt als remittiertes Lichtsignal 20 zu einem Lichtempfänger 22 zurück. Dieser Lichtempfänger 22 weist eine Vielzahl von Lichtempfangselementen 24, 26 auf, die vorzugsweise als Lawinenphotodioden im Geigermodus oder SPADs ausgebildet sind. Die Empfangssignale der Lichtempfangselemente 24, 26 werden von einer Steuer- und Auswertungseinheit 28 ausgelesen und dort ausgewertet.

Auf dem Lichtempfänger sind die meisten Lichtempfangselemente als Messempfangselemente 24 vorgesehen, deren Empfangssignal auf Informationen über das Objekt 18 ausgewertet werden. Mindestens eins oder einige der Lichtempfangselemente fungieren als Zufallserzeugungselemente 26. Sie sind in dieser Ausführungsform dunkel oder optisch blind, beispielsweise durch eine Metallisierungsschicht abgedeckt, und daher schwarz dargestellt. Alternativ sind die Zufallserzeugungselemente 26 anders gegen den Überwachungsbereich 16 und insbesondere das remittierte Lichtsignal 20 abgeschirmt, etwa mit einer optischen Barriere. Es ist auch nicht ausgeschlossen, dass Zufallserzeugungselemente 26 doch Licht empfangen können, aber dann besteht zumindest eine gewisse Korrelation mit der Messung, die dafür in Kauf genommen würde.

Der in Figur 1 dargestellte Lichtempfänger 22 ist einteilig, insbesondere ein einziger Chip, der sowohl die Messempfangselemente 24 als auch die Zufallserzeugungselemente 26 umfasst. Alternativ kann jeweils ein Empfangselement, vorzugsweise SPAD-Array für die Messempfangselemente 24 und die Zufallserzeugungselemente 26 vorgesehen sein.

Der Sensor 10 kann die Anwesenheit des Objekts 18 oder eine andere Eigenschaft bestimmen, ist aber vorzugsweise entfernungsmessend. Dazu bestimmt die Steuer- und Auswertungseinheit 28 eine Lichtlaufzeit vom Aussenden des Lichtsignals 14 bis zum Empfang des remittierten Lichtsignals 20 und rechnet dies über die Lichtgeschwindigkeit in einen Abstand um. Dabei sind Phasen- wie Pulsverfahren denkbar. Die weitere Beschreibung konzentriert sich auf ein Pulsverfahren, dessen Zeitverhalten zufällig variiert wird. Aber auch ein Phasenverfahren kann von einem Zufallselement profitieren, beispielsweise indem die Sequenz eines Frequenzhoppings zufällig bestimmt wird.

Der Sensor 10 weist in einer praktischen Ausführungsform weitere Elemente auf, insbesondere Sende- und Empfangsoptiken und Anschlüsse, auf die hier vereinfachend nicht eingegangen wird. Die Auftrennung in Lichtempfänger 22 und Steuer- und Auswertungseinheit 28 in Figur 1 ist auch in der Praxis denkbar, dient aber in erster Linie der Erläuterung. Vorzugsweise werden diese Elemente zumindest teilweise auf einem gemeinsamen Chip integriert, dessen Fläche sich lichtempfindliche Bereiche der Lawinenphotodioden und einzelne oder Gruppen von Lawinenphotodioden zugeordnete Schaltkreise zu deren Auswertung und Ansteuerung teilen.

In Figur 1 wird eine koaxiale Anordnung beispielhaft durch Anordnung des Lichtsenders 12 vor dem Lichtempfänger 22 erreicht. Alternative koaxiale Anordnungen etwa durch Teilerspiegel sind ebenso möglich wie eine biaxiale oder Doppelaugenanordnung, in der die optischen Achsen von Lichtsender 12 und Lichtempfänger 22 parallel zueinander verlaufen.

Figur 2 zeigt ein beispielhaftes vereinfachtes Ersatzschaltbild einer einzelnen Lawinenphotodiode 24 im Geiger-Modus. In der Praxis handelt es sich um ein Halbleiterbauteil, dessen nicht dargestellter Aufbau hier als bekannt vorausgesetzt wird. Die Lawinenphotodiode 24 zeigt zum einen das Verhalten einer Diode 30. Sie hat eine Kapazität, die durch einen parallel geschalteten Kondensator 32 repräsentiert wird. Der mögliche Lawinendurchbruch erzeugt Ladungsträger, deren Ursprung in dem Ersatzschaltbild als Stromquelle 34 dargestellt wird. Der Lawinendurchbruch wird durch ein auftreffendes Photon 36 ausgelöst, wobei dieser Vorgang wie ein Schalter 38 wirkt. Es gibt dann verschiedene Möglichkeiten, das Ausgangssignal 40 zu betrachten, auf die hier nicht näher eingegangen wird.

Im Bereitschaftszustand liegt über der Diode 30 eine Spannung oberhalb der Durchbruchspannung an. Erzeugt dann ein einfallendes Photon 36 ein Ladungsträgerpaar, so schließt dies gleichsam den Schalter 38, so dass die Lawinenphotodiode 24 über die Stromquelle 34 mit Ladungsträgern geflutet wird. Neue Ladungsträger entstehen aber nur, solange das elektrische Feld stark genug bleibt. Wird durch die Stromquelle 34 der Kondensator 32 so weit entladen, dass die Durchbruchspannung unterschritten ist, so kommt die Lawine von selbst zum Erliegen ("passive quenching"). Danach lädt sich der Kondensator 32 wieder auf, bis wieder eine Spannung über der Durchbruchspannung an der Diode 30 anliegt. Es gibt alternative Ausgestaltungen, in denen die Lawine von außen erkannt und daraufhin eine Entladung unter die Durchbruchspannung ausgelöst wird ("active quenching"). Eine Lawinenphotodiode 24 hat somit die Fähigkeit, sogar einzelne Photonen zu detektieren, und eignet sich daher für einen hochempfindlichen Lichtempfänger 22.

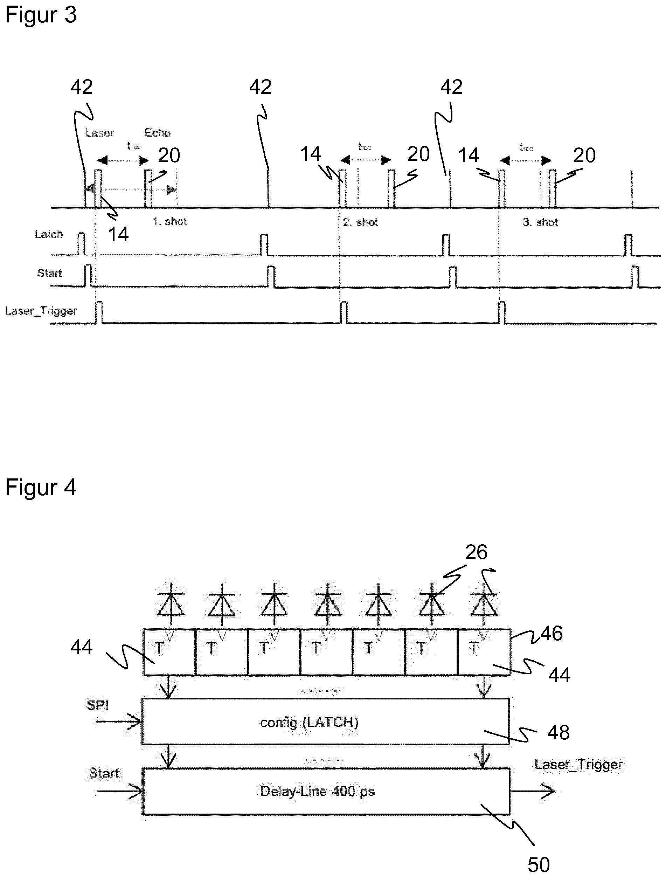

Figur 3 zeigt eine schematische Darstellung der Signale im Sendepfad eines Sensors 10 zur Entfernungsmessung mit einem Pulsverfahren. Es sind drei Messperioden gezeigt (1. shot, 2. shot, 3. shot), deren Beginn mit einem senkrechten Strich 42 gekennzeichnet ist. Die jeweilige Messung (Start) beginnt, nachdem die Zufallszahl bereitgestellt ist, die mittels der Zufallserzeugungselemente 26 generiert wird (Latch). Das kann asynchron geschehen, weil Verschiebungen in der Datenübertragung die gewollte Zufallsverzögerung nur weiter verbessern.

Das elektrische Signal zur Erzeugung eines Sendepulses (Laser_Trigger) wird nun in jeder Messung individuell in Abhängigkeit von der vorliegenden Zufallszahl verzögert. Eine einfache Möglichkeit dafür ist, die Zufallszahl mit einer Mindestverzögerung zu multiplizieren. Es ist aber auch anders möglich, den Sendezeitpunkt in einem festen Senderahmen zufällig festzulegen, beispielsweise durch eine Tabelle, aus der zufällig gewählt wird. Dementsprechend erzeugt der Lichtsender 12 das ausgesandte Lichtsignal 14 oben in Figur 3 in jeder Messung mit unterschiedlicher Verzögerung. Das remittierte Lichtsignal 20 wird nach einer Lichtlaufzeit t_{TDC} wieder empfangen. Die Messperioden sind vorzugsweise gegenüber einem Messverfahren ohne zufällige Verzögerungen verlängert, um einen ausreichenden Zeitpuffer für die Verzögerungen und die Lichtlaufzeiten vorzuhalten.

Die Erzeugung von Zufallszahlen mit Hilfe der Zufallserzeugungselemente 26 ist auf verschiedenste Weisen möglich. In einer einfachen Ausführungsform wird das Empfangssignal eines Zufallserzeugungselements 26 binarisiert, etwa durch ein Monoflop, und daran ein digitaler Zähler angeschlossen, der die zufällig verteilten DCR-Ereignisse zählt. Als Zahlenbeispiel ist ein kontinuierlich durchlaufender 4-Bit-Zähler denkbar, der in einem 100ns-Senderahmen mit einer Minimalverzögerung entsprechend 6ns-Pulsen zufällig verteilte Sendezeitpunkte bestimmt.

Figur 4 zeigt ein Blockdiagramm einer weiteren Ausführungsform eines Zufallsgenerators auf Basis der Empfangssignale von Zufallserzeugungselementen 26. In diesem Beispiel sind sieben Zufallserzeugungselemente 26 vorgesehen, deren Empfangssignal jeweils ein Bit 44 eines 7-Bit-Registers 46 in einer Togglefunktion steuert. Die Toggle-Bits 44 können auch als 1-Bit-Zähler verstanden werden. Jedes Ereignis von einem der Zufallserzeugungselemente 26 invertiert folglich ein Bit der 7-Bit-Zufallszahl in dem Register 46. Dadurch wird die Sequenz der Zufallszahlen deutlich rascher durchmischt als bei einem einfachen Zähler. Anstelle von sieben Zufallserzeugungselementen 26 und einem 7-Bit-Register 46 kann auch eine andere Anzahl verwendet werden.

Zu Beginn einer Messung wird dann die jeweilige Zufallszahl aus dem Register 46 in ein Latch 48 übertragen und ein Vielfaches einer Minimalverzögerung, hier in Form eine Delay-Line 50 von 400ps, als Verzögerung auf den Laser_Trigger aufgeschlagen. So werden Verzögerungen zwischen 0...127 * 400ps ermöglicht.

Die zufälligen Verzögerungen sorgen dafür, dass sich keine zwei Sensoren 10 gleichartig verhalten. Der Zufallseffekt wird noch dadurch unterstützt, dass die DCR mit der Temperatur stark variiert. Wenn die Zufallszahlen nicht schnell genug wechseln, kann auch mit einer herkömmlichen Pseudozufallssequenz oder sogar einer festen Sequenz kombiniert werden. Die mit den Zufallserzeugungselementen 26 generierte Zufallszahl kann dann als Seed beziehungsweise als Modifikator, beispielsweise Offset in der festen Sequenz dienen.

## Patentansprüche

1. Optoelektronischer Sensor (10) zur Erfassung von Objekten (18) in einem Überwachungsbereich (16) mit einem Lichtempfänger (22), der eine Vielzahl von Lawinenphotodiodenelementen (24, 26) aufweist, die jeweils mit einer Vorspannung oberhalb einer Durchbruchspannung vorspannbar und somit in einem Geiger-Modus betreibbar sind, wobei mindestens ein Lawinenphotodiodenelement als Messempfangselement (24) ausgebildet ist, das Messlicht (20) aus dem Überwachungsbereich (16) empfängt, sowie mit einer Auswertungseinheit (28), die dafür ausgebildet ist, aus dem Empfangssignal des Messempfangselements (24) Informationen über die Objekte (18) zu gewinnen, **dadurch gekennzeichnet,**
**dass** mindestens ein Lawinenphotodiodenelement als gegen Lichteinfall abgeschirmtes Zufallserzeugungselement (26) ausgebildet ist und dass die Auswertungseinheit (28) aus dem Empfangssignal des Zufallserzeugungselements (26) eine Zufallszahl generiert.

2. Sensor (10) nach Anspruch 1,
wobei die Auswertungseinheit (28) einen Zähler (44) aufweist, der jeweils bei einem Detektionsereignis des Zufallserzeugungselements (26) weitergezählt wird.

3. Sensor (10) nach Anspruch 1 oder 2,
wobei mehrere Lawinenphotodiodenelemente als Zufallserzeugungselement (26) ausgebildet sind und die Auswertungseinheit (26) mehrere Zähler (44) aufweist, die jeweils bei einem Detektionsereignis in einem dem Zähler (44) zugeordneten Zufallserzeugungselement (26) weitergezählt werden.

4. Sensor (10) nach Anspruch 2 oder 3,
wobei mindestens ein Zähler (44) als 1-Bit-Zähler ausgebildet ist.

5. Sensor (10) nach einem der vorhergehenden Ansprüche,
der einen Lichtsender (12) zum Aussenden eines Lichtsignals (14) aufweist, und wobei die Auswertungseinheit (28) dafür ausgebildet ist, eine Eigenschaft des Lichtsignals (14), insbesondere dessen Modulation, in Abhängigkeit von der Zufallszahl vorzugeben.

6. Sensor (10) nach Anspruch 5,
wobei die Auswertungseinheit (28) dafür ausgebildet ist, einen Sendezeitpunkt des Lichtsignals(14), insbesondere eines als Puls ausgebildeten Lichtsignals (14), in Abhängigkeit von der Zufallszahl vorzugeben.

7. Sensor (10) nach Anspruch 6,
wobei die Auswertungseinheit (28) dafür ausgebildet ist, den Sendezeitpunkt als ein der Zufallszahl entsprechendes Vielfaches einer vorgegebenen Minimalverzögerung (50) vorzugeben.

8. Sensor (10) nach einem der vorhergehenden Ansprüche,
der als entfernungsmessender Sensor ausgebildet ist, dessen Auswertungseinheit (28) eine Lichtlaufzeit und daraus einen Objektabstand bestimmt.

9. Verfahren zur Erfassung von Objekten (18) in einem Überwachungsbereich (16) und zur Erzeugung einer Zufallszahl mit einem Lichtempfänger (22), der eine Vielzahl von Lawinenphotodiodenelementen (24, 26) aufweist, die jeweils mit einer Vorspannung oberhalb einer Durchbruchspannung vorgespannt und somit in einem Geiger-Modus betrieben sind, wobei mit mindestens einem als Messempfangselement (24) ausgebildeten Lawinenphotodiodenelement Messlicht (20) aus dem Überwachungsbereich (16) empfangen und das Empfangssignal ausgewertet wird, um Informationen über die Objekte (18) zu gewinnen, **dadurch gekennzeichnet,**
**dass** die Zufallszahl aus dem Empfangssignal mindestens eines als Zufallserzeugungselement (26) ausgebildeten, gegen Lichteinfall abgeschirmten Lawinenphotodiodenelements generiert wird.

## Claims

1. An optoelectronic sensor (10) for detecting objects (18) in a monitoring region (16) having a light receiver (22) comprising a plurality of avalanche photodiode elements (24, 26) which can each be biased with a bias voltage above a breakdown voltage and can thus be operated in a Geiger mode, wherein at least one avalanche photodiode element is configured as a measurement receiving element (24) which receives measurement light (20) from the monitoring region (16), and having an evaluation unit (28) which is configured to obtain information about the objects (18) from the received signal of the measurement receiving element (24),
**characterized in that** at least one avalanche photodiode element is configured as a random generator element (26) which is shielded from incident light, and **in that** the evaluation unit (28) generates a random number from the received signal of the random generator element (26).

2. The sensor (10) according to claim 1,
wherein the evaluation unit (28) comprises a counter (44) which is incremented for each detection event of the random generating element (26).

3. The sensor (10) according to claim 1 or 2,
wherein a plurality of avalanche photodiode elements are configured as random generator elements (26) and the evaluation unit (26) comprises a plurality of counters (44) which are each incremented for a detection event in a random generator element (26) assigned to the counter (44).

4. The sensor (10) according to claim 2 or 3,
wherein at least one counter (44) is formed as a 1-bit counter.

5. The sensor (10) according to any of the preceding claims,
the sensor (10) having a light transmitter (12) for transmitting a light signal (14), and wherein the evaluation unit (28) is configured to set a characteristic of the light signal (14), in particular its modulation, in dependence on the random number.

6. The sensor (10) according to claim 5,
wherein the evaluation unit (28) is configured to set a transmission time of the light signal (14), in particular of a light signal (14) in the form of a pulse, in dependence on the random number.

7. The sensor (10) according to claim 6,
wherein the evaluation unit (28) is configured to set the transmission time as a multiple corresponding to the random number of a predetermined minimum delay (50).

8. The sensor (10) according to any of the preceding claims,
the sensor (10) being configured as a distance-measuring sensor whose evaluation unit (28) determines a light time of flight and, from that, an object distance.

9. A method for detecting objects (18) in a monitoring region (16) and for generating a random number with a light receiver (22) which has a plurality of avalanche photodiode elements (24, 26) which are each biased with a bias voltage above a breakdown voltage and are thus operated in a Geiger mode, wherein at least one avalanche photodiode element configured as a measurement receiving element (24) is used to receive measurement light (20) from the monitoring region (16) and wherein the received signal is evaluated in order to obtain information about the objects (18),
**characterized in that** the random number is generated from the received signal of at least one avalanche photodiode element which is configured as a random generator element (26) and is shielded from incident light.

## Revendications

1. Capteur optoélectronique (10) pour détecter des objets (18) dans une zone à surveiller (16), comportant un récepteur de lumière (22) qui comprend une multitude d'éléments formant photodiodes à avalanche (24, 26) susceptibles d'être polarisés chacun avec une tension de polarisation supérieure à une tension de claquage et de fonctionner donc en mode Geiger, au moins un élément formant photodiode à avalanche étant réalisé sous forme d'élément de réception de mesure (24) recevant une lumière de mesure (20) depuis la zone à surveiller (16), et comportant une unité d'évaluation (28) qui est réalisée pour obtenir des informations relatives aux objets (18) à partir du signal de réception de l'élément de réception de mesure (24),
**caractérisé en ce que**
au moins un élément formant photodiode à avalanche est réalisé sous la forme d'un élément générateur aléatoire (26) protégé contre l'incidence de lumière, et **en ce que** l'unité d'évaluation (28) génère un chiffre aléatoire à partir du signal de réception de l'élément générateur aléatoire (26).

2. Capteur (10) selon la revendication 1,
dans lequel l'unité d'évaluation(28) comprend un compteur (44) qui est incrémenté respectivement lors d'un événement de détection de l'élément générateur aléatoire (26).

3. Capteur (10) selon la revendication 1 ou 2,
dans lequel plusieurs éléments formant photodiodes à avalanche sont réalisés sous forme d'élément générateur aléatoire (26), et l'unité d'évaluation (26) comprend plusieurs compteurs (44) qui sont incrémentés respectivement lors d'un événement de détection dans un élément générateur aléatoire (26) associé au compteur (44).

4. Capteur (10) selon la revendication 2 ou 3,
dans lequel au moins un compteur (44) est réalisé sous forme de compteur à 1 bit.

5. Capteur (10) selon l'une des revendications précédentes,
comportant un émetteur de lumière (12) pour émettre un signal lumineux (14), l'unité d'évaluation (28) étant réalisée pour imposer une propriété du signal lumineux (14), en particulier sa modulation, en fonction du chiffre aléatoire.

6. Capteur (10) selon la revendication 5,
dans lequel l'unité d'évaluation (28) est réalisée pour imposer un instant d'émission du signal lumineux (14), en particulier d'un signal lumineux (14) réalisé sous forme d'impulsion, en fonction du chiffre aléatoire.

7. Capteur (10) selon la revendication 6,
dans lequel l'unité d'évaluation (28) est réalisée pour imposer l'instant d'émission sous la forme d'un multiple d'un retard minimal donné (50), qui correspond au chiffre aléatoire.

8. Capteur (10) selon l'une des revendications précédentes,
réalisé sous forme de capteur télémétrique dont l'unité d'évaluation (28) détermine un temps de parcours de lumière et à partir de celui-ci une distance de l'objet.

9. Procédé pour détecter des objets (18) dans une zone à surveiller (16) et pour générer un chiffre aléatoire au moyen d'un récepteur de lumière (22) qui comprend une multitude d'éléments formant photodiodes à avalanche (24, 26) qui sont polarisés chacun avec une tension de polarisation supérieure à une tension de claquage et qui fonctionnent donc en mode Geiger, dans lequel au moyen d'au moins un élément formant photodiode à avalanche réalisé sous forme d'élément de réception de mesure (24), une lumière de mesure (20) est reçue depuis la zone à surveiller (16) et le signal de réception est évalué pour obtenir des informations relatives aux objets (18),
**caractérisé en ce que**
le chiffre aléatoire est généré à partir du signal de réception d'au moins un élément formant photodiode à avalanche réalisé sous forme d'élément générateur aléatoire (26) et protégé à l'encontre d'une incidence de lumière.
